# EUROPEAN PATENT SPECIFICATION

(11) **EP 0 689 898 B1**
(45) Date of publication and mention of the grant of the patent: **29.09.1999**
(21) Application number: 95107803.9
(22) Date of filing: 22.05.1995
(51) Int. Cl.: B23Q 3/06

(54) **Fixture for supporting, registering and retaining workpieces on machine tools, particularly for containing disc brake calipers**
Spannvorrichtung zum Tragen, Registrieren und Halten von Werkstücken in einer Werkzeugmaschine, insbesondere von Scheibenbremssatteln
Dispositif de fixation pour supporter, enregistrer et maintenir des pièces dans une machine-outil, en particulier contenant des étriers de frein à disque

(30) Priority: 31.05.1994 IT TO940446
(43) Date of publication of application: 03.01.1996
(73) Proprietor: VIGEL S.p.A., I-10071 Borgaro Torinese (Torino) (IT)
(72) Inventor: Cavallo, Giorgio, 10071 Borgaro Torinese (Prov.Torino) (IT)
(74) Representative: Modiano, Guido, Dr.-Ing.

(56) References cited:
- EP-A- 0 003 244
- DE-B- 2 739 109
- GB-A- 858 940
- US-A- 1 788 652
- US-A- 2 755 758
- US-A- 4 157 820
- US-A- 4 773 290

## Description

The present invention relates to a fixture for supporting, registering, and retaining workpieces on machine tools, particularly machines for programmable multiple machining operations. EP-A-0003244 discloses a device for positioning and clamping workpieces to be machined in three dimensions, which comprises positioning and clamping members having spherical members each having a flat surface for engaging a workpiece and a spherical seat for each spherical member whereby each spherical member is capable of limited rotational movement in its seat.

More specifically, the invention relates to a spatial registering and locking system for three-dimensional workpieces in general, typically semifinished workpieces obtained by casting, which must be subjected to one or more machining operations entailing chip-forming and/or plastic deformation.

A typical example of a three-dimensional semifinished workpiece to be subjected to subsequent chip-forming machining operations is the workpiece for containing calipers of disc brakes for motor vehicles, briefly referenced as brake caliper body, to which the present description is referred, although it is evident that the invention is not limited to this application, since the described fixture is adapted to register and retain generic three-dimensional workpieces having any profile and any size.

It is known that a body registered with respect to a spatial set of three perpendicular axes has six degrees of freedom with respect to said registering axes, so that locking it in a given position with respect to said set of three axes entails using six simple restraints, which separately or in combination eliminate the movements and rotations of said body with respect to said set of three axes.

In accordance with this general principle, current brake caliper bodies are cast with six registering surfaces (or at least four surfaces and a self-centering restraint) for an equal number of simple resting elements that can ensure that the body is registered and retained by a fixture with which the machine tool is equipped. For this purpose, the registering and retaining fixture, which is configured in each instance according to the shape of the brake caliper body, or more generally of the three-dimensional workpiece being machined, is currently provided with a system of positioning pushers able to register the body by contact engagement with said registering surfaces and with a bracket system able to lock said body in the registering position determined by the registering surfaces and by the pushers that cooperate with them.

These known methods for registering and retaining workpieces, such as in particular the above mentioned brake caliper bodies, entail numerous drawbacks: mainly, on the one hand, considerable complication of the shells or half-molds for casting the bodies, which must be provided with said registering surfaces and must at the same time ensure that the body can be removed from the mold once casting has been performed, and, on the other hand, considerable complexity of the registering and retaining fixture due to the presence of the positioning pushers system and of centering devices, if required.

In particular, the complexity of the registering and retaining fixture makes it difficult to reconfigure the fixture with respect to the machining of three-dimensional bodies having different shapes, since it is necessary to adapt in each instance the variable parts of the pushers and, of any self-centering restraints, the registering surfaces, and the locking brackets to the workpiece being machined.

The aim of the present invention is to eliminate these and other severe drawbacks, and within the scope of this general aim, it has the following important particular objects:
-- to significantly simplify the manufacture of the workpiece casting shells or half-molds, reducing, and particularly halving, the number of registering elements to be provided on the cast body and at the same time making it easier to remove the body from the mold after casting;
-- to reduce the costs for restoring worn casting shells or half-molds;
-- to significantly simplify the structure of the registering and retaining fixture by eliminating in particular the positioning pushers system and any centering means associated therewith, and thus making it easier, quicker, and less troublesome to reconfigure said fixtures in relation to the machining of three-dimensional bodies having different shapes;
-- to provide a highly functional registering and retaining fixture that allows the optional automation of the reconfiguration operations as well as the loading and unloading of the workpieces being machined and is structurally very compact and therefore capable of ensuring high rigidity of the fixtures used for the machining of the three-dimensional workpiece that is registered and locked on said fixture.

According to the present invention, this aim, as well as these and other important objects, are achieved with a fixture for supporting, registering, and retaining workpieces in general and brake caliper bodies in particular, which has the specific features stated in the appended claims.

Substantially, the invention is based on the concept of eliminating the six degrees of freedom of the workpiece with respect to a registering set of three, by means of only three retaining and registering elements, preferably structured and arranged so that the first one retains said workpiece for three degrees of freedom, the second one retains said workpiece for two of said degrees, and the third one retains said workpiece for the remaining degree of freedom.

For this purpose, the first retention element is preferably constituted by a spherical hinge formed by a first support with a spherical head that is adapted to engage a frustum-shaped notch provided on the workpiece to be registered and locked; the second retention element is constituted by a second support with a spherical head that is adapted to engage a V-shaped notch of said body; and the third retention element is constituted by a third support with a head that is shaped like a spherical dome, with which a contact surface, provided on the workpiece itself, cooperates by simple tangent contact engagement.

The three supports, arranged at the vertices of a triangle that acts as base, also form, as a whole, an isostatic support for the workpiece that is placed on them. At least one locking bracket, but preferably a set of three locking brackets, each advantageously constituted by a swivelling arm rigidly coupled to a respective rotatable and vertically movable pivot, is provided in order to engage the workpiece in an upward region, at each support, and lock it in forced contact engagement against said supports. Said supports are carried by a removable plate constituting the element that can be reconfigured.

The characteristics, purposes, and advantages of the fixture according to the present invention will become apparent from the following detailed description and with reference to the accompanying drawings, given by way of non-limitative example, wherein:
figure 1 is a front elevation view of the fixture in the configuration for locking a brake caliper body, which is shown in dashed lines for better comprehension of the drawing;
figure 2 is a top plan view of figure 1;
figures 3, 3a, and 3b are enlarged-scale detail views of figure 1.

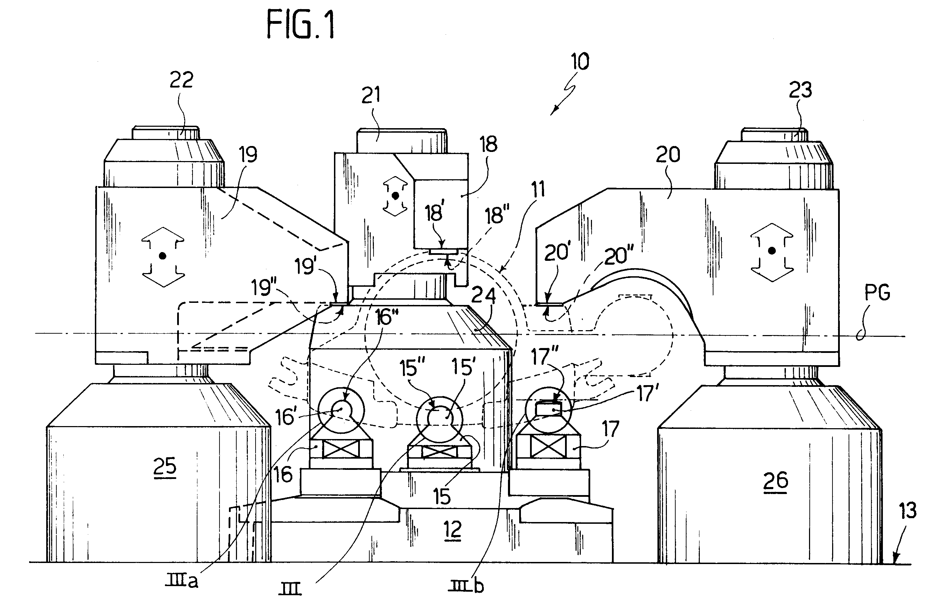

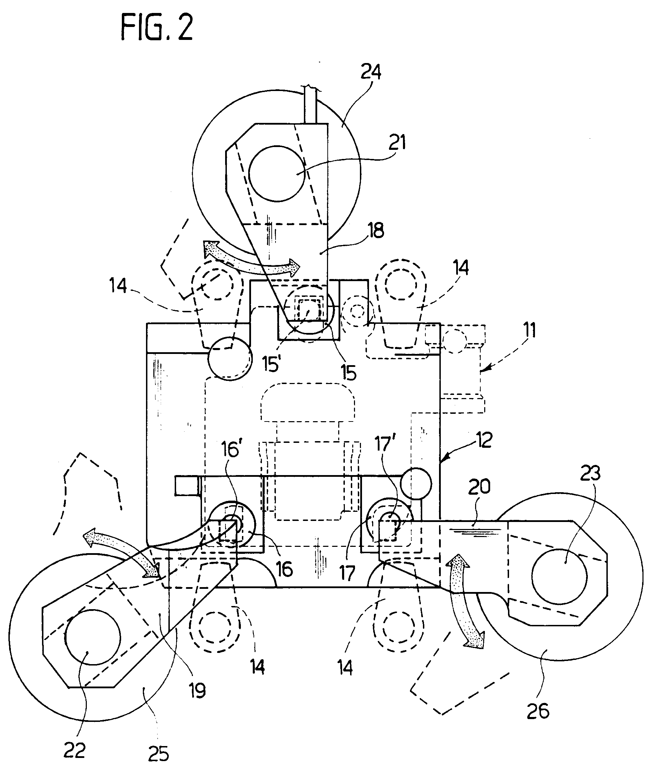

Initially with reference to figures 1 and 2, the reference numeral 10 generally designates the supporting, registering, and retaining fixture according to the invention, and the reference numeral 11 designates a brake caliper body that is engaged and retained by the fixture 10 in order to be machined by one or more units of a chip- forming and/or plastic-deformation machine, for example of the type with a plurality of stations, controlled in a known manner by a programmable controller (not shown).

The fixture 10 comprises a base plate 12 that is detachably supported on a supporting surface 13 and constitutes the element of said fixture that can be reconfigured. Four rotatable tenons 14 (shown in dashed lines in figure 2) associated with the supporting surface 13 allow to lock the plate 12 in the active position or to disengage it and remove it for reconfiguration or replacement.

The plate 12 comprises a first, a second, and a third supports, designated by the reference numerals 15, 16, and 17 respectively, which are arranged substantially at the vertices of a triangle that acts as base (figure 2).

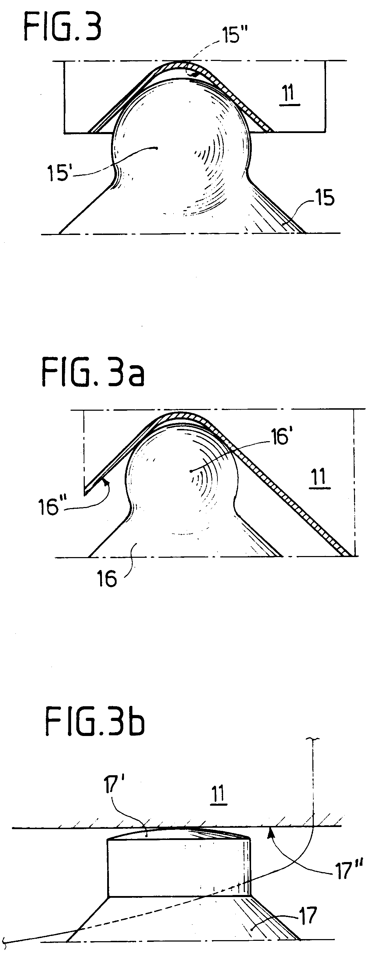

In order to spatially retain the body 11, in the above specified manner, the first support 15 is configured so as to constitute a retention element capable to eliminate three degrees of freedom of said body 11, and accordingly, it is provided in the form of a spherical hinge that is formed by a spherical head 15'adapted to cooperate with a frustum-shaped notch 15'' provided by casting on the body 11 (figure 3). In turn, the second support 16 is configured so as to eliminate two degrees of freedom of the body 11, and accordingly it is provided with a spherical head 16' that is adapted to cooperate with a V-shaped notch 16'' that is also provided by casting on the body 11 (figure 3a). The third support 17 is shaped so as to eliminate the remaining degree of freedom of the body 11, and is accordingly provided with a head 17' that is shaped like a spherical dome and with which a contact surface 17'', also formed by casting on the body 11, cooperates by simple tangent resting engagement (figure 3b). The three supports 15, 16, and 17, arranged as mentioned at the vertices of a base triangle, also form an isostatic support for the body 11 that is placed on them. The vertical extension of each support 15, 16, and 17 is chosen according to the configuration of the body 11 and according to the criterion of maintaining the desired orientation of the body 11 with respect to the arrangement of the supporting surface 13.

It should be noted that the notches 15''-16'' and the surface 17'' are arranged on the same side of the body 11 with respect to the plane PG that coincides with the mating plane of the half-molds or shells for casting the body 11 (the lower side relative to figure 1); this, in accordance with the above mentioned aim and objects, simplifies the construction of said casting half-molds or shells and makes it easier to remove said body 11 from the mold after casting.

A set of three locking brackets 18, 19, and 20 cooperates with the upright supports to lock the body 11 in the desired position; each bracket is constituted by a swivelling arm that is rigidly coupled to a respective pivot 21, 22, and 23 that is rotatable and vertically movable in a corresponding supporting bush 24, 25, and 26; said pivots are actuated by mechanical and/or hydraulic angular and vertical movement elements (not shown) adapted to move each arm from a disengagement position (shown in dashed lines in figure 2) to a position for engaging said body 11. The end of each arm is preferably provided with a respective contact plate 18', 19', and 20' that is applied to the arm or is monolithic therewith; the plates are adapted to cooperate, by forced contact engagement, with respective supporting and registering planes 18'', 19'', and 20'' formed by casting on the body 11 substantially in alignment with the supports 15, 16, and 17.

The fixture 10 is reconfigured by replacing the base plate 12 with another one provided with supports that are differently arranged and/or have a different axial extension and are suited to the different configuration of the body 11 being machined, and by replacing, for the same purpose and if necessary, the set of three locking brackets with another set having a different profile and/or extension.

The execution details and the embodiments may of course be altered extensively with respect to what is described and illustrated by way of non-limitative example without altering the concept of the invention and without thereby abandoning the scope of the invention defined by the appended claims, wherein the reference numerals are provided only for the sake of better comprehension.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Fixture for supporting, registering, and retaining workpieces on machine tools, particularly semifinished workpieces (11) for containing disc brake calipers, comprising a set of three retention and registering elements (15,16,17) that is adapted to eliminate the six degrees of freedom of said workpiece with respect to a set of three registering axes, and in that said retention elements are structured so that the first one (15) retains said workpiece for three degrees of freedom, the second one (16) retains said workpiece for two degrees of freedom, and the third one (17) retains said workpiece for the remaining single degree of freedom, characterized in that the first retention element is constituted by a spherical hinge that is formed by a first support (15) provided with a spherical head (15') whose spherical surface is arranged in the fixture for being adapted to engage a frustum-shaped notch (15'') of the workpiece (11) to be registered and locked; in that the second retention element is constituted by a second support (16) with a spherical head (16') whose spherical surface is arranged in the fixture for being adapted to engage a V-shaped notch (16'') of said workpiece (11); and in that the third retention element is constituted by a third support (17) with a head (17') shaped like a spherical dome whose spherical dome surface is arranged in the fixture for being adapted to engage a contact surface (17''), provided on said workpiece, so as to cooperate by simple tangent contact engagement.

2. Fixture according to claim 1, characterized in that said three retention elements (15,16,17) are arranged at the vertices of a triangle that acts as base, and form, as a whole, an isostatic support for the workpiece (11) arranged on the elements.

3. Fixture according to claims 1 to 2, characterized in that it comprises at least one locking bracket, preferably a set of three locking brackets (18,19,20), adapted to engage the workpiece (11) in an upward region and substantially at the axis of said supports (15,16, and 17) and to lock it in forced contact engagement against said elements.

4. Fixture according to claim 3, characterized in that each locking bracket (18,19,20) is constituted by a swivelling arm that is rigidly coupled to a respective pivot (21,22,23) that is rotatable and vertically movable in a corresponding supporting bush (24,25,26); said pivots being actuated by mechanical and/or hydraulic movement elements adapted to move each arm from a disengagement position to a position for engaging said workpiece (11).

5. Fixture according to claims 3 and 4, characterized in that the end of each locking bracket is provided with a respective supporting plate (18',19',20') that is adapted to cooperate, by forced contact engagement, with a respective supporting and registering surface (18'',19'',20'') formed on the workpiece (11).

6. Fixture according to any one of claims 1 to 5, characterized in that said elements (15,16,17) are carried by a detachable base plate (12) constituting the part of said fixture that can be reconfigured.

## Patentansprüche

1. Befestigungsvorrichtung zum Abstützen, Einpassen und Halten von Werkstücken auf Werkzeugmaschinen, insbesondere halbfertigen Werkstücken (11) zum Aufnehmen von Scheibenbremssätteln, umfassend einen Satz von drei Halte- und Passelementen (15, 16, 17), der geeignet ist, die sechs Freiheitsgrade des Werkstücks in Bezug auf einen Satz von drei Messachsen zu eliminieren, und in dem die Halteelemente so strukturiert sind, daß das erste (15) das Werkstück in drei Freiheitsgraden hält, das zweite (16) das Werkstück in zwei Freiheitsgraden hält und das dritte (17) das Werkstück in dem verbleibenden einzigen Freiheitsgrad hält, dadurch gekennzeichnet, daß das erste Halteelement durch ein Kugelgelenk gebildet ist, das durch eine erste Abstützung (15) ausgebildet ist, die mit einem Kugelkopf (15') versehen ist, dessen Kugeloberfläche in der Befestigungsvorrichtung angeordnet ist, so daß sie geeignet ist, in eine kegelstumpförmige Kerbe (15'') des einzupassenden und zu arretierenden Werkstücks (11) einzugreifen, daß das zweite Halteelement durch eine zweite Abstützung (16) mit einem Kugelkopf (16') gebildet ist, dessen Kugeloberfläche in der Befestigungsvorrichtung angeordnet ist, so daß sie geeignet ist, in eine V-förmige Kerbe (16'') des Werkstücks (11) einzugreifen, und daß das dritte Halteelement durch eine dritte Abstützung (17) gebildet ist mit einem Kopf (17'), der wie eine Kugelschale geformt ist, deren Kugelschalenoberfläche in der Befestigungsvorrichtung angeordnet ist, so daß sie geeignet ist, an einer Kontaktfläche (17'') anzugreifen, die auf dem Werkstück vorgesehen ist, um durch einfachen Tangentenkontaktgriff zusammenzuwirken.

2. Befestigungsvorrichtung nach Anspruch 1, dadurch gekennzeichnet, daß die drei Halteelemente (15, 16, 17) an den Spitzen eines Dreiecks angeordnet sind, das als Basis dient, und insgesamt eine isostatische Abstützung für das auf den Elementen angeordnete Werkstück (11) bilden.

3. Befestigungsvorrichtung nach Anspruch 1 oder 2, dadurch gekennzeichnet, daß sie mindestens einen Arretierbügel, bevorzugt einen Satz von drei Arretierbügeln (18, 19, 20) aufweist, die geeignet sind, das Werkstück (11) in einem oberen Bereich zu ergreifen und im wesentlichen an der Achse der Abstützungen (15, 16, 17) und es in Druckkontaktgriff gegen die Elemente festzuhalten.

4. Befestigungsvorrichtung nach Anspruch 3, dadurch gekennzeichnet, daß jeder Arretierbügel (18, 19, 20) aus einem Schwenkarm gebildet ist, der starr mit einem zugehörigen Gelenk (21, 22, 23) gekoppelt ist, das drehbar und in einer entsprechenden Lagerbuchse (24, 25, 26) vertikal beweglich ist, wobei die Gelenke durch mechanische und/oder hydraulische Bewegungselemente betätigbar sind, die geeignet sind, jeden Arm aus einer Freigabeposition in eine Position zum Greifen des Werkstucks (11) zu bewegen.

5. Befestigungsvorrichtung nach Anspruch 3 und 4, dadurch gekennzeichnet, daß das Ende jedes Arretierbügels mit einer entsprechenden Trägerplatte (18' 19', 20') versehen ist, die geeignet ist, durch Druckkontaktgriff mit einer entsprechenden Abstütz- und Passfläche (18'', 19'', 20'') zusammenzuwirken, die auf dem Werkstück (11) ausgebildet ist.

6. Befestigungsvorrichtung nach einem der Ansprüche 1 bis 5, dadurch gekennzeichnet, daß die Elemente (15, 16, 17) von einer entfernbaren Grundplatte (12) getragen sind, die den Teil der Befestigungsvorrichtung bildet, der wiederhergerichtet werden kann.

## Revendications

1. Dispositif de serrage destiné à supporter, repérer et maintenir des pièces à usiner sur des machines-outils, particulièrement des pièces à usiner semi-finies (11) pour retenir des étriers de freins à disque, comprenant un jeu de trois éléments de rétention et de repérage (15, 16, 17) qui est adapté pour éliminer les six degrés de liberté de ladite pièce à usiner eu égard à un jeu de trois a::es de repérage, et en ce que lesdits éléments de rétention sont structurés de façon telle que le premier élément (15) maintient ladite pièce à usiner sur trois degrés de liberté, le second élément (16) maintient ladite pièce à usiner sur deux degrés de liberté et le troisième élément (17) maintient ladite pièce à usiner sur le degré de liberté restant, caractérisé en ce que le premier élément de rétention est constitué par une articulation sphérique qui est formée par un premier support (15) équipé d'une tête sphérique (15') dont la surface sphérique est disposée dans le dispositif de serrage de façon à être adaptée pour engager une encoche an tronc de cône (15'') de la pièce à usiner (11) devant être repérée et bloquée ; en ce que le second élément de rétention est constitué par un second support (16) présentant une tête sphérique (16') dont la surface sphérique est disposée dans le dispositif de serrage de façon à être adaptée pour engager une encoche en V (16'') de ladite pièce à usiner (11) ; et en ce que le troisième élément de rétention est constitué par un troisième support (17) présentant une tête (17') formée comme un dôme sphérique et dont la surface du dôme sphérique est disposée dans le dispositif de serrage de façon à être adaptée pour engager une surface de contact (17'') prévue sur ladite pièce à usiner, de façon à coopérer par simple engagement par contact tangent.

2. Dispositif de serrage selon la revendication 1, caractérisé en ce que lesdits trois éléments de rétention (15, 16, 17) sont disposés aux sommets d'un [<angle qui agit en tant que base et forme, dans son ensemble, un support isostatique pour la pièce à usiner (11) disposée sur les éléments.

3. Dispositif de serrage selon les revendications 1 à 2, caractérisé en ce qu'il comprend au moins un crochet de blocage, de préférence un jeu de trois crochets de blocage (18, 19, 20), adaptés pour engager la pièce à usiner (11) dans une région supérieure et substantiellement au niveau de l'axe des dits supports (15, 16 et 17) et la bloquer selon un engagement par contact forcé contre lesdits éléments.

4. Dispositif de serrage selon la revendication 3, caractérisé en ce que chaque crochet de blocage (18, 19, 20) est constitué par un bras pivotant qui est relié de façon rigide à un pivot respectif (21, 22, 23) qui peut pivoter et se déplacer verticalement dans une bague de support correspondante (24, 25, 26) ; lesdits pivots étant actionnés par des éléments de déplacement mécaniques et/ou hydrauliques adaptés de façon à déplacer chaque bras depuis une position de désengagement vers une position engageant ladite pièce à usiner (11).

5. Dispositif de serrage selon les revendication 3 et 4, caractérisé en ce que l'extrémité de chaque crochet de blocage est munie d'une plaque de support respective (18', 19', 20'), qui est adaptée de façon à coopérer, par engagement par contact forcé, avec une surface de support et de repérage correspondante (18'', 19'', 20'') formée sur ladite pièce à usiner (11).

6. Dispositif de serrage selon l'une quelconque des revendications 1 à 5, caractérisé en ce que lesdits éléments (15, 16, 17) sont portés par une plaque de base détachable (12) constituant la partie du dit dispositif de serrage pouvant être reconfigurée.
